Europäisches Patentamt

European Patent Office

Office européen des brevets

(11) Veröffentlichungsnummer: **0 417 444 A2**

# (12) EUROPÄISCHE PATENTANMELDUNG

(21) Anmeldenummer: 90114408.9

(22) Anmeldetag: 27.07.90

(51) Int. Cl.5: **B65G 53/60, B04C 5/14**

(30) Priorität: 14.09.89 DE 3930769

(43) Veröffentlichungstag der Anmeldung:
20.03.91 Patentblatt 91/12

(84) Benannte Vertragsstaaten:
AT BE DE DK ES FR GB GR IT NL SE

(71) Anmelder: DEUTSCHE BABCOCK ENERGIE-
UND UMWELTTECHNIK
AKTIENGESELLSCHAFT
Duisburger Strasse 375
W-4200 Oberhausen 1(DE)

(72) Erfinder: Rehwinkel, Heiko, Dr.
Schulstrasse 28

W-4250 Bottrop(DE)
Erfinder: Meier, Hans-Joachim
Gindericher Strasse 25
W-4234 Alpen-Mentzelen(DE)
Erfinder: Morawski, Gerd
Meckenstocker Weg 2b
W-4300 Essen 1(DE)
Erfinder: Möllenhoff, Horst, Dr.
Witthausstrasse 29
W-4330 Mülheim/Ruhr(DE)

(74) Vertreter: Müller, Jürgen, Dipl.-Ing.
Deutsche Babcock AG Lizenz- und
Patentabteilung Duisburger Strasse 375
W-4200 Oberhausen 1(DE)

(54) Vorrichtung zum Ausschleusen von feinkörnigen Feststoffen.

(57) Zum Ausschleusen von Feststoff aus einem Raum erhöhten Druckes in einen Raum niedrigeren Druckes dient ein zwischen den Räumen angeordneter mit Feststoff gefüllter Stauraum (3). Die Geometrie des Stauraumes (3) ist so groß bemessen, daß der den geöffneten Stauraum (3) durchströmende Gas-Massenstrom des in dem Raum erhöhten Druckes vorhandenen Gases auf Grund des Druckverlustes innerhalb des Stauraumes (3) auf einen praktisch keine pneumatische Förderung des Feststoffes bewirkenden Wert reduziert ist. Am Ende oder innerhalb des Stauraumes (3) ist ein Förderorgan angeordnet.

Fig. 1

EP 0 417 444 A2

# VORRICHTUNG ZUM AUSSCHLEUSEN VON FEINKÖRNIGEN FESTSTOFFEN

Die Erfindung betrifft eine Vorrichtung zum Ausschleusen von feinkörnigen Feststoffen aus einem Raum erhöhten Druckes in einen Raum niedrigeren Druckes.

Es ist bekannt (US-PS 45 16 989), den aus einem Gas in einem Zyklon abgetrennten Staub mit Hilfe eines Schleussystems auszuschleusen. Das bekannte Schleussystem besteht aus drei hintereinander geschalteten Bunkern, die an den Feststoffaustrag des Zyklons angeschlossen sind. Der mittlere Bunker ist über durch Ventile abgesicherte Rohrleitungen wechselweise unter Systemdruck und Atmosphärendruck zu setzen. Ein solches Ausschleussystem arbeitet diskontinuierlich und erfordert einen hohen apparativen und regelungstechnischen Aufwand.

Der Erfindung liegt die Aufgabe zugrunde, die gattungsgemäße Vorrichtung zum Ausschleusen von Feststoffen zu vereinfachen und so zu gestalten, daß sie kontinuierlich arbeitet.

Diese Aufgabe wird bei einer gattungsgemäßen Vorrichtung durch die kennzeichnenden Merkmale des Anspruches 1 gelöst. Vorteilhafte Ausgestaltungen der Erfindung sind in den Unteransprüchen angegeben.

Bei der erfindungsgemäßen Vorrichtung wird die physikalische Eigenschaft ausgenutzt, daß sich der Druck eines Gases bei der Durchströmung durch eine bewegte Feststoffsäule abbaut. Diese Feststoffsäule bildet sich in dem Stauraum aus. Sie wird auf einen solchen Strömungswiderstand eingestellt, daß das bei geöffnetem Stauraumende austretende Druckgas praktisch keine pneumatische Förderung des Feststoffes bewirkt. In diesem Fall kann der Feststoff über bei Atmosphärendruck arbeitende Förderorgane abgezogen werden.

Mehrere Ausführungsbeispiele der Erfindung sind in der Zeichnung dargestellt und werden im folgenden näher erläutert. Es zeigen:

Fig. 1 schematisch eine Vorrichtung zum Ausschleusen von Feststoffen und

Fig. 2 schematisch eine andere Ausführungsform einer Vorrichtung zum Ausschleusen von Feststoffen.

In der Zeichnung ist das untere Ende eines unter Druck stehenden Raumes dargestellt. Dieser Raum kann ein Zyklon 1 sein, der Feststoffe aus einem Gas abtrennt, das unter einem Systemdruck steht, der oberhalb des Atmosphärendruckes liegt. Der Zyklon 1 ist mit einem trichterförmigen Feststoffaustrag 2 versehen, in dem sich der abgetrennte Feststoff ansammelt.

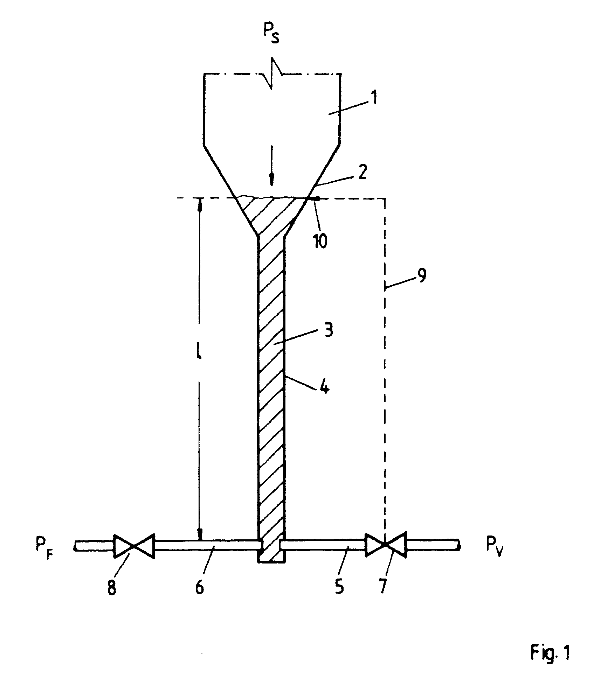

An den Feststoffaustrag 2 schließt sich ein Stauraum 3 an, der durch ein senkrecht angeordnetes Rohr oder Leitung 4 begrenzt ist. Am unteren Ende des Stauraumes 3 ist ein Förderorgan angeordnet, das nach Fig. 1 als pneumatischer Förderer ausgebildet ist. Dieser pneumatische Förderer enthält eine Leitung 5, durch die Fördergas, z. B. Luft, herangeführt wird, und eine Leitung 6, durch die der Feststoff mit Hilfe des Fördergases gefördert wird. Die Fördergasleitung 5 mündet in den unteren Teil des Stauraumes 3 ein, während die Feststoff-Förderleitung 6 von dem Stauraum 3 in der Nähe der Einmündung der Fördergasleitung 5 ausgeht. Die in dem Stauraum 3 liegenden Enden der Leitungen 5, 6 können in gleicher Ebene oder höhenversetzt zueinander angeordnet sein.

In der Fördergasleitung 5 und in der Feststoff-Förderleitung 6 ist jeweils ein Ventil 7, 8 angeordnet. Das Ventil 7 in der Fördergasleitung 5 ist über eine Steuerleitung 9 mit einem Füllstandsmesser 10 verbunden, der in dem oberen Teil des Stauraumes 3 bzw. in dem Feststoffaustrag 2 des Zyklons 1 angeordnet ist. Über diese Niveauregelung wird eine vorgegebene Stauhöhe innerhalb des Stauraumes 3 eingestellt.

In Abhängigkeit von der Art des Feststoffes, wie Körnung, Oberflächenbeschaffenheit und Vorpressung, wird der Querschnitt und die Länge I des Stauraumes 3 oberhalb der Ebene des Förderorganes so bemessen, daß am Ende des Stauraumes 3 der Druck des in dem Stauraum 3 vorhandenen Gases weitgehend abgebaut ist. Dieser Abbau ist so weit, daß bei geöffnetem Stauraum 3 allein durch den Massenstrom des Gases innerhalb des Stauraumes 3 praktisch noch keine pneumatische Förderung des aufgestauten Feststoffes zustande kommt.

Die beschriebene Vorrichtung arbeitet auf folgende Weise. Die Ventile 7, 8 in den Leitungen 5, 6 des pneumatischen Förderer bleiben solange geschlossen, bis sich in dem Stauraum 3 eine Schüttung bis zu dem durch den Füllstandsmesser 10 vorgegebenen Niveau aufgestaut hat. Nach Erreichen dieses Füllstandes öffnet das Ventil 8 in der Feststoff-Förderleitung 6, wodurch in dieser Leitung 6 ein Druck eingestellt wird, der geringer ist als der Druck $P_S$ in dem System, aus dem der Feststoff ausgeschleust werden soll. Auf Grund dieser Druckverhältnisse wird die Schüttung des Feststoffes innerhalb des Stauraumes 3 von einer Gasmenge aus dem unter Druck stehenden System durchströmt und das Gas durch die Feststoff-Förderleitung 6 abgeführt. Diese Gasmenge ist so gering, daß noch keine Feststoff-Förderung in der Feststoff-Förderleitung 6 eintritt. Der Feststoff wird ausgetragen, wenn das Ventil 7 in der Fördergasleitung 5 geöffnet wird. Dieses Ventil 7 ist an einen Druck $P_V$ geschaltet, der größer ist als der Druck

$P_F$, der nötig ist, um den Feststoff pneumatisch abzutransportieren ($P_F$ kleiner als $P_S$). Das Ausschleusen des Feststoffes kann mit Hilfe der Niveausteuerung kontinuierlich oder durch eine reine Auf-Zu-Steuerung diskontinuierlich erfolgen.

In der Fig. 1 ist die den Stauraum 3 begrenzende Leitung 4 senkrecht angeordnet. Eine solche Anordnung, bei der sich die Leitung 4 auch stetig nach unten erweitern kann, ist für das Ausschleusen von schlecht fließfähigem Feststoff und für leicht backenden Feststoff geeignet. Bei der Behandlung von unproblematisch fließfähigem Feststoff kann die den Stauraum 3 begrenzende Leitung auch Krümmer enthalten oder in Aufwärtsrichtung verlegt sein.

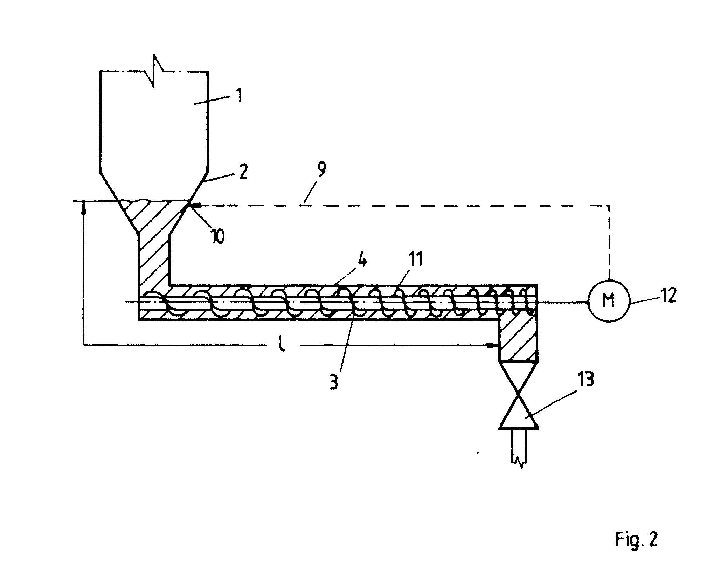

Bei stark backendem Feststoff ist die Feststoffbewegung innerhalb des Stauraumes 3 durch eine mechanische Unterstützung in Gang zu halten. Eine solche Ausführung ist in Fig. 2 dargestellt. Dabei nimmt der sich an den Feststoffaustrag 2 anschließende Stauraum 3 einen mechanischen Förderer als Förderorgan in Form z. B. eines Schneckenförderers 11 auf. Die Welle des Schneckenförderers 11 ist mit einem Antriebsmotor 12 verbunden. Der Antriebsmotor 12 ist über die Steuerleitung 9 mit dem Füllstandsmesser 10 gekoppelt. Am Austragsende des Gehäuses des Schneckenförderers 11 ist ein Ventil 13 angeordnet, das in der oben beschriebenen Weise zum Anfahren dient. Der Stauraum 3 ist nach den Kriterien ausgelegt, die im Zusammenhang mit der in Fig. 1 dargestellten Vorrichtung erläutert sind, so daß bei geöffnetem Ventil 13 die durch den Stauraum 3 strömende Gasmenge aus dem Drucksystem keine pneumatische Förderung erzeugt.

Der aus dem Stauraum 3 mit Hilfe des Schneckenförderers 11 geförderte Feststoff kann direkt in einem unter Atmosphärendruck stehenden Silo gespeichert oder mit Hilfe weiterer Förderorgane abgeführt werden. Der Schneckenförderer 11 bietet den Vorteil, daß durch variable Steigung der Wendel über der Länge eine Verpressung des Feststoffes am Ende des Stauraumes 3 zu erreichen ist. Auf diese Weise wird der unerwünschte Gasstrom aus dem Drucksystem durch den Feststoff erheblich reduziert und die Baulänge l des Schneckenförderers 11 kann wirksam verringert werden.

## Ansprüche

1. Vorrichtung zum Ausschleusen von Feststoff aus einem Raum erhöhten Druckes in einen Raum niedrigeren Druckes, dadurch gekennzeichnet, daß zwischen den Räumen ein mit dem Feststoff gefüllter Stauraum (3) angeordnet ist, daß die Geometrie des Stauraumes (3) so groß bemessen ist, daß der den geöffneten Stauraum (3) durchströmende Gas- massenstrom des in dem Raum erhöhten Druckes vorhandenen Gases auf Grund des Druckverlustes innerhalb des Stauraumes (3) auf einen keine pneumatische Förderung des Feststoffes bewirkenden Wert reduziert ist und daß am Ende oder innerhalb des Stauraumes (3) ein Förderorgan angeordnet ist.

2. Vorrichtung nach Anspruch 1, dadurch gekennzeichnet, daß in dem Staurum (3) ein Füllstandsmesser (10) angeordnet ist, der mit dem Förderorgan gekoppelt ist.

3. Vorrichtung nach Anspruch 1 oder 2, dadurch gekennzeichnet, daß das Förderorgan ein pneumatischer Förderer ist.

4. Vorrichtung nach Anspruch 1 oder 2, dadurch gekennzeichnet, daß das Förderorgan ein mechanischer Förderer ist.

Fig. 1

Fig. 2